# EUROPEAN PATENT SPECIFICATION

(11) **EP 1 580 347 B1**
(45) Date of publication and mention of the grant of the patent: **29.04.2009**
(21) Application number: 04460050.0
(22) Date of filing: 16.11.2004
(51) Int. Cl.: E04F 19/04

(54) **Set of skirting profiles**
Bausatz für eine Sockelleiste
Ensemble de plinthes

(30) Priority: 18.11.2003 PL 36352703
(43) Date of publication of application: 28.09.2005
(73) Proprietor: Decora Sp. z o.o., 63-000 Sroda Wielkopolska (PL)
(72) Inventor: Siudak, Piotr, 25-420 Kielce (PL); Kawalec, Adrian, 42-287 Lubsza Slaska (PL)
(74) Representative: Szymanski, Roman

(56) References cited:
- WO-A-03/023924
- CH-A- 497 626
- DE-A1- 19 832 978
- DE-U1- 9 005 902
- GB-A- 1 186 222
- US-A- 6 122 872

## Description

The subject of the invention is a set of skirting profiles, masking an expansion gap between the floor and the wall.

From the document WO03/023924 a solution is known consisting of a set with a masking board with a key separable from an elastic tongue of the clamp, wherein the key of the board is located at an acute angle to the wall surface. The clamp has a distancing foot, which is placed on the floor surface. The masking board is made from a closed shell created by a skeletal lateral profile divided by ribs into chambers. The board has a chamfer in the lower part and a longitudinal protrusion parallel to the wall surface, which together with the chamfer forms an inverted V shape. The clamp is formed by a plate, wherein one end has a haunch formed by a double bend finished with an elastic tongue, normally forming an inverted V shape, with the free end pointing towards the masking board. The distancing foot of the clamp ends with a protrusion with a oblique bearing surface, on which rests the aforementioned chamfer and protrusion of the masking board.

From the document CH 497 626 A a solution is known consisting of a set with a masking board with two protrusions with a series of teeth, wherein the protrusions work separately with the clamp, wherein the aforementioned protrusions of the board are placed at an acute angle to the wall surface. The clamp has two oblique channels, which work with the protrusions of the board and a distancing foot, which is placed on the floor surface.

From the document DE 9 005 902 U1 a solution is known consisting of a set which contains a combination of a masking board and a clamp. The masking board has the form of an undercut block resembling an angle bar with a horizontal channel running along the place the arms of the angle bar meet. The clamp has the form of a tray closed with a hinged flap, wherein the place where the tray wall turns into the flap is protracted outside of the tray. In the horizontal channel of the masking board the connection of the channel and the flap is located, forming the clamp element.

Under the Polish patent application number 346028 a board is known that has a groove situated at an angle α to the plane of the retaining wall. In its lower part the board has a chamfer. The connector is provided in the form of a plate with a haunch ended with an elastic tongue, with its free end directed towards the masking board. The other end of the connector features a distancing foot, which is placed on the floor surface during board assembly. The foot considerably facilitates the assembly of the connections at the same level in relation to the ground. The foot ends with an oblique bearing surface that ensures mating with the chamfer of the masking board. The chamfer allows the extending of the distancing foot, which is particularly important for the correct assembly, especially in rooms with a large floor area, where a reasonably big expansion gap needs to be ensured. The surfaces of the elastic tongue have longitudinal lips with a triangular cross-section, protecting the board from slipping out easily. The connector also features racks with free ends bended towards the side of the racks. The racks make it easy to place power cables in the space behind the masking board. The free end of the tongue is profiled in such a way as to lean on the inside of the tongue after the masking board has been installed. The connector has two holes for fixing it to the wall, although fixing it with one pin is sufficient. The other hole is used to relocate the connector, when the masking board has become overly worn, after being removed from the connectors multiple times over.

The aim of the invention is to simplify the assembly of power cables inside the board. This is solved by a set of shirting profiles in accordance with claim 1.

Another advantageous feature of the invention has two racks spread out from the inside surface of the upper part of the long vertical wall below the angle bar.

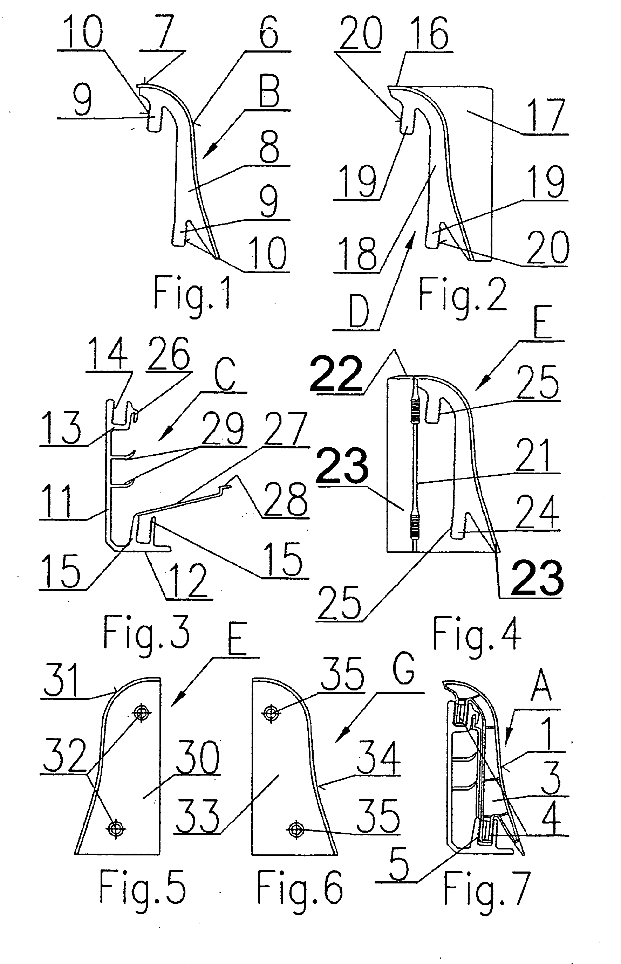

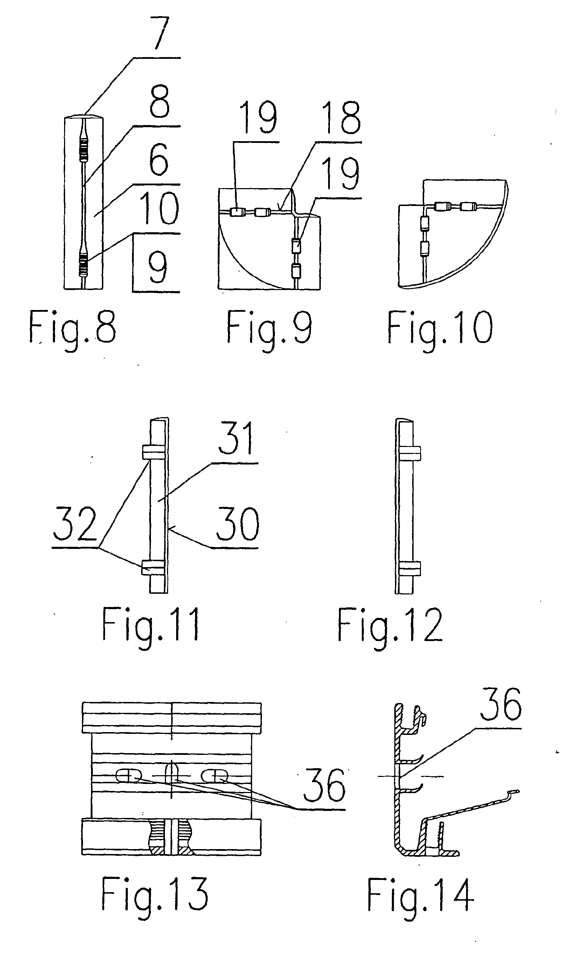

The subject of the invention is presented as realized by the drawings, where Fig. 1 is an end view of the connector, Fig. 2 is an end view of the inside corner and Fig 3 is an end view of the clamp and, further, Fig. 4 is an end view of the outside corner, Fig. 5 is a rear view of the left end and Fig. 6 is a rear view of the right end, while Fig. 7 is an end view of the board in combination with the clamp, Fig. 8 is a rear view of the connector, Fig. 9 is a top view of the inside corner, Fig. 10 is a top view of the outside corner, whereas Fig. 11 is an end view of the left end and Fig. 12 is an end view of the right end and, finally, Fig. 13 is a front view of the clamp and Fig. 14 is the cross-section of the clamp going through the central hole.

The set includes the board A, the connector B, the clamp C, the inside corner D, the outside corner E, the left end F and the right end G. The cross-section of the board A is limited by the edge of the outside wavy surface and the edge of the inside wavy surface of the exhibition wall 1, which passes in upper fragments into the arched roof 2, while the outside wavy surface passing into the outside surface of the arched roof 2 forms the exhibition surface of the board A. The wavy surface of the inside board A has a number of the locating ribs 3 spreading out, each of which is provided with the two tongues 4 that are directed downwards from the arched roof 2, while the edges of the sides of the lower parts of the tongues 4 have the row of teeth 5. The connector B has the wavy front wall 6 with the outside exhibition surface passing in its upper fragments into the arched roof 7, wherein a rib 8 spreads out from its wavy inner surface, wherein two tongues 9 spread out from the rib 8 downwards from the arched roof 7, while the edges of the sides of the lower parts of the tongues 9 have the row of teeth 10. The clamp C has the long vertical wall 11 passing in its lower part into the lower horizontal wall 12, wherein the inside surface of the upper part of the long vertical wall 11 has the angle bar 13 spreading out with a long arm directed upwards, while a fragment of the inside surface of the long vertical wall 11 and the inside surface of the long arm of the angle bar 13, which together form a channel lying opposite to each other, have the rows of teeth 14, whereas the inside surface of the lower horizontal wall 12 has the two mutually parallel high ribs 15 spreading out, which form a horizontal channel. The inside corner D is formed by the roof 16 passing into the two outside mutually perpendicular wavy walls 17 and the two locating ribs 18, wherein in top view the edges of the surface of the roof 16 can be characterized by two line segments situated at the right angle in relation to each other and also by another two line segments being mutually perpendicular that describe the fragment of the curved surface of the roof 16 bended downwards. The inside corner D has the tongues 19 spreading out of the sides of the locating ribs 18 that are directed downwards from the arched roof 16, while the edges of the sides of the lower parts of the tongues 19 have the row of teeth 20. The outside corner E is formed by the two locating ribs 21 and the roof 22 crowning them and passing into the two outside mutually perpendicular wavy walls 23. In top view the edges of the surface of the roof 22 can be characterized by two line segments situated at the right angle in relation to each other and also by another two line segments being mutually perpendicular that describe the fragment of the curved surface of the roof 22 bended downwards. The outside corner E has the tongues 24 spreading out of the sides of the locating ribs 21 that are directed downwards from the arched roof 22, while the edges of the sides of the lower parts of the tongues 25 have the row of teeth 25. The outside surface of the arm of the angle bar 13, lying opposite the long vertical wall 11 of the clamp C, has the catch 26 directed towards the lower vertical wall 14, whereas the top of the high rib 15, being situated on the side of the long vertical wall 11, has the hinged wall 27 with the catch 28. The two racks 29 spread out from the inside surface of the upper part of the long vertical wall 11 below the angle bar 13. The endings of the sequence of the components of the set are closed with the left end F and the right end G. The surfaces of the left end F are the mapping of the angle bar with arms that are different in the width of the racks, while the surface of the wider rack 30 is a plane limited with the edge of the outside wavy wall 31 and from the inside the wider rack 30 has the two locating ribs 32 spreading out from the side of its surface. The surfaces of the right end G are the mapping of the angle bar with arms that are different in the width of the racks, while the surface of the wider rack 33 is a plane limited with the edge of the outside wavy wall 34 and from the inside the wider rack 33 has the two locating ribs 35 spreading out from the side of its surface. The long vertical wall 11 of the clamp C has a number of the fixing holes 36. The board A works with the clamp C and the connector B makes it possible to install a sequence of the set components. The channel formed by the fragment of the inside surface of the long vertical wall 11 and the inside surface of the long arm of the angle bar 13, which lie opposite each other and feature the rows of teeth 14, as well as the horizontal channel being formed by the two mutually parallel high ribs 15 are the places to fix the tongues 4, 9, 10, 19 and 24. The hinged wall 27 facilitates the installation of the cables placed in the racks 29 inside the board.

## Claims

1. Set of skirting profiles containing a board (A), a connector (B), a clamp (C), , an outside corner (D), an inside corner (E),
wherein the cross-section of the board (A) is limited by the edge of the outside wavy surface and the edge of the inside wavy surface of the exhibition wall (A), which passes in upper fragments into the arched roof, whereas the outside wavy surface passing into the outside surface of the arched roof forms the exhibition surface of the board (A) and, in addition the inside wavy surface of the board (A) has a number of locating ribs (3) spreading out, each of which is provided with two tongues (4) being directed downwards from the arched roof (2), while the edges of the sides of the lower parts of the tongues (4) have the row of teeth (5), and
the clamp has the a long vertical wall (11), which in its lower part becomes the lower horizontal wall (12) and, further,
the connector (B) has a wavy front wall (6) with the outside exhibition surface passing in its upper fragments into the arched roof (7), wherein its inside wavy surface has a rib (8) spreading out and, further, the connector (B) has two tongues (9) spreading out of the rib (8) that are directed downwards from the arched roof (16), while the edges of the sides of the lower parts of the tongues (9) have a row of teeth (10) and
the inside corner (D) is formed by two mutually perpendicular vertical walls (17) and the roof (16) crowning them which passes into the two outside mutually perpendicular wavy walls (17) and two locating ribs (18), while in top view the edges of the surface of the roof (16) present two line segments situated at the right angle in relation to each other and also another two line segments being mutually perpendicular that describe the fragment of the curved surface of the roof (16) bended downwards the inside corner (D) has the tongues (19) spreading out of the sides of the locating ribs (10) that are directed downwards from the arched roof (16), while the edges of the sides of the lower parts of the tongues (19) have a row of teeth (20),
wherein the outside corner (E) is formed by two locating ribs (21) and the roof (22) crowning them and passing into two outside mutually perpendicular wavy walls, while in top view the edges of the surface of the roof (22) present two line segments situated at the right angle in relation to each other and also another two line segments being mutually perpendicular that describe the fragment of the curved surface of the roof (22) bended downwards, whereas the outside corner (E) has tongues (24) spreading out of the sides of the locating ribs (21) that are directed downwards from the arched roof, while the edges of the sides of the lower parts of the tongues have a row of teeth (25), being **characterised in that**
the inside surface of the upper part of the long vertical wall (11) of the clamp (C) has an angle bar (13) spreading out with a long arm being directed upwards, while the fragment of the inside surface of the long vertical wall (11) and the inside surface of the long arm of the angle bar (13), which, lying opposite each other, form a channel, have rows of teeth (14),
whereas the inside surface of the lower horizontal wall (12) of the clamp (C) has the two mutually parallel high ribs (15) spreading out to form a horizontal channel, and, further,
the outside surface of the arm of the angle bar (13), which lies opposite the long vertical wall (11), has a first catch (26) spreading out towards the lower horizontal wall (12), whereas the top of the high rib (15) which is situated on the side of the long vertical wall (11), has a hinged wall (27) crowned witch a second catch (28).

2. The set under claim 1, **characteristed in that** that two racks (29) spread out from the inside surface of the upper part of the long vertical wall (11) below the angle bar (13).

## Patentansprüche

1. Bausitz für eine Sokelleiste, der sich aus der Leiste (A), dem Verbindungsstück (B), der Klammer (C), der Innenecke (D), der Außenecke (E) zusammensetzt, wobei der Querschnitt der Leiste (A) ist mit dem Rand der äußeren wellenförmigen Fläche sowie dem Rand der inneren wellenförmigen Fläche der Frontwand (A), die im oberen Bereich in einen abgerundeten Schirm übergeht und die Frontfläche der Leiste (A) bildet, begrenzt, das Verbindungsstück (B) besteht aus einer wellenförmigen Frontfläche (6) und einer äußeren Frontfläche, die im oberen Bereich in einen abgerundeten Schirm übergeht (7), wo an der inneren Fläche der Kante eine Haltenase (8) befestigt ist, die Innenecke (D) besteht aus zwei zueinander senkrecht angeordneten lotrechten Wänden (17) und einem Schirm (16), der deren Gewölbe bildet und in zwei zueinander senkrecht angeordnete wellenförmige Wände (17) sowie zwei Haltenasen (18) übergeht wobei in der Ansicht von Oben die Kanten des Schirmes (16) doppelte Segmente, die zueinander senkrecht angeordnet sind sowie die restlichen zueinander senkrecht angeordneten doppelten Segmenten, die den nach unten gebogenen Teil des gekrümmten Schirmes (16) umschreiben, darstellen, die Außenecke (E) besteht aus zwei Federelementen (21) und einem Schirm (22), der deren Gewölbe bildet und in zwei zueinander senkrecht angeordnete wellenförmige Wände übergeht wobei in der Ansicht von Oben die Kanten des Schirmes (22) doppelte Segmente, die zueinander senkrecht angeordnet sind sowie die restlichen zueinander senkrecht angeordneten doppelten Segmenten, die den nach unten gebogenen Teil des gekrümmten Schirmes (22) bilden, darstellen, darüber hinaus besteht die innere wellenförmige Fläche der Leiste (A) aus mehreren, wobei die Außenecke (E) aus Federelementen (24) besteht, die an den Seiten der Haltenasen angebracht sind (21), die ab dem abgerundeten Schirm nach unten gerichtet sind und die Wandränder in dem unteren Bereich der Federelemente mit einer Längsriffelung (25) versehen sind, Haltenasen (3), von denen jede zwei Federelemente hat (4), die ab dem abgerundeten Schirm (2) nach unten gerichtet sind wobei die Wandränder in dem unteren Bereich der Federelemente (4) mit einer Längsriffelung (15) versehen sind, die Klammer besteht aus einer langen senkrechten Wand (11), die im unteren Bereich in die waagerechte Wand (12) übergeht, das Verbindungsstück (B) besteht darüber hinaus aus zwei Federelementen (9), die an den Haltenasen (8) befestigt sind, die ab dem abgerundeten Schirm (16) nach unten gerichtet sind wobei die Wandränder in dem unteren Bereich der Federelemente (9) mit einer Längsriffelung (10) versehen sind, die Innenecke (D) ist mit Federelementen (19), die an beiden Seiten der Haltenasen befestigt sind (10), versehen, die ab dem abgerundeten Schirm (16) nach unten gerichtet sind wobei die Wandränder in dem unteren Bereich der Federelemente (19) mit einer Längsriffelung (20) versehen sind, dabei ist es charakteristisch, dass im oberen Bereich an die innere Fläche der langen senkrechten Wand (11) der Klammer (C) ein Winkel (13) angebracht ist, dessen langer Winkelarm nach oben gerichtet ist und ein Teil der äußeren Fläche der langen senkrechten Wand (11) und die innere Fläche des langen Winkelarmes (13), die zwischen einander einen Kanal bilden, mit einer Längsriffelung (14) versehen sind, die innere Fläche der unteren waagerechten Wand (12) der Klammer (C) ist mit zwei langen, zueinander parallel angeordneten Haltenasen (15), die den waagerechten Kanal bilden, versehen, die äußere Fläche des Winkelarmes (13), die neben der langen senkrechten Wand (11) gelegen ist, ist mit dem ersten Befestigungshacken (26), der in Richtung der unteren waagerechten Wand (12) montiert ist, versehen, wobei die Spitze der langen Haltenase (15), die sich neben der senkrechten Wand (11) befindet, mit der Klappe (27), die mit dem zweiten Befestigungshacken (28) beendet ist, mittels Scharnier verbunden ist.

2. Der Bausitz für eine Sockelleiste laut Patentanspruch 1, der sich **dadurch kennzeichnet, dass** im oberen Bereich an der langen senkrechten Wand (11) unterhalb des Winkels (13) zwei Kanäle (29) angebracht sind.

## Revendications

1. L'ensemble de plinthes contenant la plinthe (A), le connecteur (B), le clip (C), l'angle extérieur (D), l'angle intérieur (E) où la coupe transversale de la plinthe (A) est limitée par le rebord de la surface ondulée extérieure et le rebord de la surface ondulée de la paroi frontale (A) qui sur sa partie supérieure se transforme en petit toit arrondi 2, tandis que la surface ondulée extérieure se transformant en surface extérieure du petit toit arrondi forme la surface frontale de la plinthe (A), le connecteur (B) possède la paroi frontale ondulée (6) avec la surface extérieure frontale se transformant sur sa partie supérieure en petit toit arrondi (7) où la surface intérieure ondulée possède une ailette ressortie (8), l'angle intérieur (D) est constitué de deux parois perpendiculaires (17) ainsi que du petit toit (16) constituant leur voûte qui se transforme en deux parois ondulées extérieures (17) ainsi qu'en deux ailettes de fixation (18), tandis qu'en vue de dessus, les rebords de la surface du petit toit 16 présentent des segments bilinéaires situés perpendiculairement ainsi que d'autres segments bilinéaires réciproquement perpendiculaires décrivant le fragment de la surface cintrée du petit toit courbé vers le bas (16), l'angle extérieur (E) est constitué de deux languettes de fixation (21) ainsi que du petit toit (22) constituant leur voûte qui se transforme en deux parois ondulées extérieures réciproquement perpendiculaires, tandis qu'en vue de dessus les rebords de la surface du petit toit (22) présentent les segments bilinéaires situés perpendiculairement ainsi que d'autres segments bilinéaires réciproquement perpendiculaires décrivant le fragment de la surface cintrée du petit toit courbé vers le bas (22), en outre, la surface ondulée intérieure de la plinthe (A) (25), quelques ailettes de fixation ressorties (3), l'angle intérieur (E) qui possède les languettes (24) ressorties des côtés des ailettes de fixation (21) dirigées vers le bas du petit toit arrondi, tandis que les rebords des parois sur la partie inférieure des languettes possèdent des riffles longitudinaux (25) dont chacune à deux languettes (4) dirigées vers le bas du petit toit arrondi (2), tandis que les rebords des parois sur la partie inférieure de languettes (4) possèdent des riffles longitudinaux (5), le clip possède une longue paroi verticale (11) qui se transforme en paroi inférieure horizontale (12) sur sa partie inférieure, en plus le clip (B) possède deux languettes (9) ressorties de l'ailette (8) qui sont dirigées vers le bas du petit toit arrondi (16), tandis que les rebords des parois sur la partie inférieure des languettes (9) possèdent des riffles longitudinaux (10), l'angle intérieur (D) possède des languettes ressorties de deux côtés des ailettes de fixtion (10) dirigées vers le bas du petit toit arrondi (16), tandis que les rebords des parois sur la partie inférieure des languettes (19) possèdent des riffles longitudinaux (20) caractéristiques par le fait que la surface intérieure de la partie supérieure de la longue paroi verticale du clip (C) contient une cornière ressortie (13) dont le bras longue est dirigé vers le haut, et le fragment de la surface extérieure de la longue paroi verticale (11) ainsi que la surface intérieure du bras longue de la cornière (13) qui constituent une rigole entre eux possèdent des riffles longitudinaux (14), la surface intérieure de la paroi inférieure horizontale (12) du clip (C) contient deux hautes ailettes ressorties réciproquement parallèles (15) formant une rigole horizontale, la surface extérieure du bras de la cornière (13) placée en face de la longue paroi verticale (11) possède le premier crochet (26) ressorti vers la paroi inférieure verticale (12), tandis que le sommet de la haute ailette (15) placé à côté de la longue paroi verticale (11) est lié au volet (27) terminé par un autre crochet(28) à l'aide d'une charnière.

2. L'ensemble de plinthes selon la revendication 1 caractéristique du fait que sur la partie supérieure sur la surface intérieure de la longue paroi verticale (11) au-dessous de la cornière (13), deux semelles (29) sont ressorties.
